Europäisches Patentamt

European Patent Office

Office européen des brevets

(11) Veröffentlichungsnummer: **0 396 752**

**A1**

(12) **EUROPÄISCHE PATENTANMELDUNG**
veröffentlicht nach Art. 158 Abs. 3
**EPÜ**

(21) Anmeldenummer: **89902216.4**

(22) Anmeldetag: **25.11.88**

(86) Internationale Anmeldenummer:
**PCT/SU88/00245**

(87) Internationale Veröffentlichungsnummer:
**WO 90/06213 (14.06.90 90/14)**

(51) Int. Cl.⁵: **B25J 9/06**

(43) Veröffentlichungstag der Anmeldung:
**14.11.90 Patentblatt 90/46**

(84) Benannte Vertragsstaaten:
**DE IT SE**

(71) Anmelder: **NAUCHNO-PROIZVODSTVENNOE OBIEDINENIE PO KOMPLEXNOMU TEKHNOLOGICHESKOMY PROEKTIROVANIJU STANKOSTROITELNYKH PREDPRIYATY "ORGSTANKINPROM", ul. 9 Parkovaya, 37 Moscow, 105264(SU)**

(72) Erfinder: **DALAKIAN, Sergei Vladimirovich**
**ul. Akademika Kapitsy, 34-193**
**Moscow, 117321(SU)**
Erfinder: **OLSHANSKY, Oleg Vladimirovich**
**ul. Gorokhovtsev, 2-50**
**Volgograd, 400093(SU)**
Erfinder: **PASTUKHOV, Sergei Jurievich**
**ul. Yasenevaya, kottedzh, 110**
**Volgograd, 400021(SU)**

(74) Vertreter: **Nix, Frank Arnold, Dr.**
**Kröckelbergstrasse 15**
**D-6200 Wiesbaden(DE)**

(54) **INDUSTRIEROBOTER.**

(57) Die Erfindung bezieht sich auf den Maschinenbau. Der Roboter enthält einen mechanischen Arm, der aus zwei Gliedern (8, 9) besteht, von denen das eine Glied (8) ein Parallelogramm darstellt. Hierbei stellt das zweite Glied (9) des Armes ebenfalls ein Parallelogramm dar und ist mit dem ersten Glied (8) mit Hilfe eines Zwischengliedes (15) gekoppelt, das in Form eines Vierecks ausgebildet ist, in dessen Ecken Gelenke (16, 17, 18, 19) angebracht sind.

FIG.1

INDUSTRIEROBOTER

## Technisches Gebiet

Die vorliegende Erfindung bezieht sich auf den Maschinenbau, insbesondere auf einen Industrieroboter.

Mit dem größten Erfolg kann die Erfindung bei der Schaffung von Robotern angewandt werden, die zum Gas- und Eletroschweißen sowie zur Bedienungeiner technologischen Ausrüstung, beispielsweise zur Beschickung von Zerspanungsmaschinen mit Rohlingen, bestimmt sind.

Außerdem kann die Erfindung in handgesteuerten Manipulatoren Anwendung finden, die zum Heben und Befördern von schweren Rohlingen bestimmt sind.

## Zugrundeliegender Stand der Technik

Man kann zwei Richtungen der Robotertechnik unterscheiden: Roboter mit ausfahrbarem Arm und Roboter mit zusammenlegbarem Arm.

Die Roboter mit ausfahrbarem Arm arbeiten im Kugelkoordinatensystem (Polarkoordinatensystem), beispielsweise der Roboter der Firma United States Robots (USA).

Der Teleskoparm dieses Roboters besteht aus zwei Gliedern, von denen das eine Glied (das innere Glied) mit einem Ausführungsorgan ausgestattet ist und in das andere Glied (das äußere Glied) hineingeht.

Die im Kugelkoordinatensystem arbeitenden Roboter kennzeichnen sich durch einfache Steuerung, weil die geradlinige Bewegung des Ausführungsorgans durch Ausfahren des Armes bei der Arbeit eines Antriebs zustandegebracht wird, sowie durch die Möglichkeit der Arbeit im Handsteuer- betrieb ohne die Notwendigkeit einer Interpolation. Jedoch weisen diese Roboter einen kleinen Griffbereich des Ausführungsorgans auf, da die Ausfahrgröße durch die Länge der Glieder des Armes begrenzt ist (der Weg des Ausführungsorgans kann 50% der Länge des Armes in der ausgefahrenen Lage nicht übersteigen). Überdies erschwert die geradlinige Bewegung des Armes den Zugang des Ausführungsorgans auf der Rückseite des Objektes oder beim Vorhandensein eines Hindernisses zwischen dem Roboter und dem Objekt.

Die Roboter mit zusammenlegbarem Arm arbeiten im angularen Koordinatensystem (Winkelkoordinatensystem).

Ein typischer Vertreter der Roboter mit zusammenlegbarem Arm ist der Roboter der Firma ASEA Modell JRB B-6 (Schweden), der ein drehbares Gestell und einen an diesem angelenkten mechanischen Arm mit einem Ausführungsorgan enthält, welcher Arm aus zwei Gliedern besteht, von denen das eine ein Parallelogramm darstellt und von Quer- und Längs—stangen gebildet ist.

Das zweite Glied stellt im Grunde die Fortsetzung einer der Quer—stangen des erwähnten Parallelogramms dar. Dies bedingt eine Änderung der Steifigkeit des Armes im ganzen in Abhängigkeit von der Konfiguration des Parallelogramms. Wenn der Winkel zwischen der Längs- und der Quer—stange gleich 90° ist (in der halbgekrümmten Lage des Armes), ist die Steifigkeit maximal. Bei der Annäherung dieses Winkels an den Nullwert (in der vollständig ausgefahrenen Lage des Armes) nimmt die Steifigkeit wesentlich ab.

Die Roboter mit zusammenlegbarem Arm sind gekennzeichnet durch geringe Steifigkeit des Armes in der ausgefahrenen Endlage, weil dabei der Winkel zwischen den Längs- und Quer——stangen an Null herankommt, durch die Unmöglich keit des Einsatz es des Roboters als handgesteuerter Manipulator, da bei der unabhängigen Arbeit eines beliebigen der Antriebe (bei fehlender Interpolation) das Ausführungsorgan längs einer zusammengesetzten Bahn bewegt wird, die von einer Kreislinie oder einer Geraden verschieden ist; durch komplizierte Steuerung, weil die Bewegung entlang einer der Achsen eine Änderung sämtlicher Koordinaten hervorruft, was wiederum komplizierte Berechnungen notwendig macht, welche mit einer Umrechnung zusammenhängen.

Offenbarung der Erfindung

Die gestellte Aufgabe wird dadurch gelöst, daß im Industrieroboter, der eine drehbare Lagerung und einen an dieser angelenkten mechanischen Arm mit einem Ausführungsorgan enthält, welcher Arm aus zwei Gliedern besteht, von denen das eine ein Parallelogramm darstellt und Längsstangen enthält, erfindungsgemäß das zweite Glied des Armes ebenfalls ein Parallelogramm darstellt, Längs——stangen enthält und mit dem ersten Glied mittels eines Zwischengliedes gekoppelt ist, das in Form eines Vierecks ausgebildet ist, in dessen Ecken Gelenke angebracht sind, welche das Zwischenglied mit den Längs——stangen des ersten und des zweiten Gliedes verbinden, wobei zwei benachbarte Gelenke, die die Längs——stangen der beiden Glieder verbinden, mit gleichachsig mit den Gelenken angeordneten Zahnrädern ausgestattet sind, die sich im Eingriff miteinander befinden und mit den erwähnten Längs——stangen der beiden Glieder starr verbunden sind.

Die erfindungsgemäße Konstruktion gestattet es, den Griffbereich des Ausführungsorgans des Roboters dadurch zu erweitern, daß das Zwischenglied die Gesamtlänge des Armes vergrössert; die Konstruktion erlaubt es auch, den Arm vollständig auszustrecken und vollständig zusammenzulegen unter Beibehaltung eines hinreichend großen Winkels zwischen der Quer- und der Längs——stange, welcher die Steifigkeit der Konstruktion bedingt.

Der Roboter mit der erfindungsgemäßen Kinematik ermöglicht die geradlinige Bewegung des Ausführungsorgans unter Beibehaltung seiner Orientierung bei der Arbeit nur eines Antriebs (der den Winkel zwischen der Längs- und der Quer——stange des ersten Gliedes verändert).

Es ist zweckmäßig, daß das Viereck in Form eines Trapezes ausgebildet ist, dessen kleinere Grundlinie der Roboterstütze zugewandt ist.

Dadurch wird in jeder beliebigen Lage des Ausführungsorgans der minimale Winkel zwischen der Längs- und der Quer——stange kleiner sein als der Winkel zwischen der Längs- und der Quer——stange für den Fall, daß die größere Grundlinie des Trapezes der Stütze zugewandt ist. Die Bildung des minimalen Winkels gewährleistet die Steifigkeit des Armes in der ausgefahrenen Lage.

Kurze Beschreibung der Zeichnungen

Im folgenden wird die vorliegende Erfindung durch eingehende Beschreibung eines konkreten Ausführungsbei — spiels derselben unter Hinweisen auf beigefügte Zeichnungen erläutert; in diesen zeigt:

Fig.1 die Gesamtansicht des erfindungsgemäßen Industrieroboters, im Längsschnitt;

Fig.2 dto, mit dem vollständig ausgestreckten mechanischen Arm.

Beste Ausführungsform der Erfindung

Der zu patentierende Industrieroboter enthält eine in der Horizontalebene drehbare Stütze 1, die mit Hilfe von Wälzlagern 2 auf einem Gestell 3 montiert ist und relativ zur Vertikalachse 0 — 0 mit Hilfe eines Elektroantriebs 4 und eines Getriebs 5 drehend angetrieben wird. Mit der Stütze 1 ist mit Hilfe eines Gelenkes 6 ein mechanischer Arm gekoppelt, der ein Ausführungsorgan 7 in Form eines Greifers trägt. Der mechanische Arm besteht aus zwei Gliedern 8 und 9. Das Glied 8 stellt ein Parallelogramm dar und enthält Längs——stangen 10 und 11 und eine Quer——stange 12.

Gemäß der Erfindung stellt das zweite Glied 9 ebenso wie das erste 8 ein Parallelogramm dar und enthält Längsstangen 13 und 14. Das zweite Glied 9 ist mit dem ersten Glied 8 vermittels eines Zwischengliedes 15 gekoppelt, das in Form eines Vierecks ausgebildet ist. In den Ecken des Vierecks sind Gelenke 16, 17, 18 und 19 angebracht die das Zwischenglied 15 mit den jeweiligen Längs——stangen 10, 11 und 13, 14 der beiden Glieder 8 und 9 verbinden. Hierbei sind zwei benachbarte Gelenke 17 und 18, welche die Längs——stangen 11 und 13 der Glieder 8 und 9 verbinden, mit Zahnrädern 20 und 21 ausgestattet, die eine gleiche Zähnezahl aufweisen und gleichachsig mit den Gelenken 17 und 18 angeordnet sind. Die Zahnräder 20 und 21 befinden sich im Eingriff miteinander und sind mit den erwähnten Längs——stangen 11 und 13 starr verbunden.

Auf diese Weise ist das Parallelogramm des ersten Gliedes 8 durch die Längs——stangen 10 und 11, die Querstange 12 und das Zwischenglied 15 gebildet, während das Parallelogramm des zweiten Gliedes 9 durch die Längs——stangen 13 und 14, eine Quer——stange, deren Funktion das Ausführungsorgan 7 erfüllt und das Zwischenglied 15 gebildet ist.

Die Längs——stangen 10 und 11 des Gliedes 8 sind mittels Gelenken 22 und 23 mit der Quer.——stange 12 verbunden, während die Längs——stangen 13 und 14 des Gliedes 9 mit Hilfe von Gelenken 24 und 25 mit der Quer——stange in Form des Ausführungsorgans 7 verbunden sind. Die Quer——stange 12 wird relativ zum Gelenk 6 durch einen Antrieb 26 geschwenkt, der mit ihr mit Hilfe eines Schraubenpaars gekoppelt ist, dessen Schraube 27 mit der (in Fig. nicht gezeigten) Ausgangswelle des Antriebs 26 verbunden ist, während die Mutter 28 an der Quer——stange 12 angebracht ist. Der Antrieb 26 ist an der Stütze 1 mit Hilfe eines Gelenkes 29 installiert.

Das Viereck, das durch die Gelenke 16, 17, 18 und 19 des Zwischengliedes 15 gebildet ist, stellt ein Trapez dar, dessen kleinere Grundfläche (das heißt der zwischen den Gelenken 17 und 18 eingeschlossene Abschnitt der Geraden A - B) zur Stütze 1 des Roboters gekehrt ist.

Zur Gewährleistung der Schwenkung der Längs——stange 10 relativ zur Quer——stange 12 ist ein Antrieb 30 vorgesehen, der an der Quer——stange 12 gleichachsig mit dem Gelenk 22 installiert ist, wobei die (in Fig. nicht gezeigte) Ausgangswelle des Antriebs 30 mit der Längs——stange 10 starr verbunden ist.

Die Arbeit des Industrieroboters geht auf die folgende Weise vor sich.

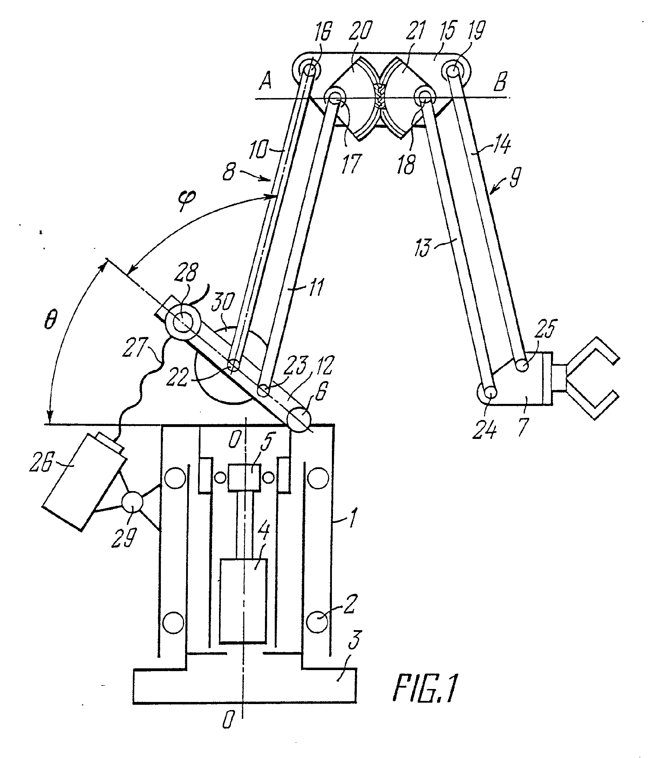

Es sei angenommen, daß der mechanische Arm ursprünglich eine (halbgekrümmte) Zwischenstellung einnimmt, wie dies in Fig.1 dargestellt ist. Nach dem Einschalten des Elektroantriebes 30 wird die Längs——stange 10 relativ zum Gelenk 22 geschwenkt. Dabei wird der Winkel $\varphi$ zwischen der Längs——stange 10 und der Quer——stange 12, welche zum Parallelogramm des ersten Gliedes 8 gehören, um eine durch das Programm vorgegebene Größe $\Delta\varphi$ verändert.

Da die Längs——stange 11 und das Zwischenglied 15 zu demselben Parallelogramm des ersten Gliedes 8 gehören, so wird der Winkel zwischen ihnen ebenfalls um die Größe $\Delta\varphi$ verändert.

Die Schwenkung der Längs——stange 11 ruft eine Drehung des Zahnrades 20 um das Gelenk 17 relativ zum Zwischenglied 15 hervor. Das mit dem Zahnrad 20 im Eingriff befindliche Zahnrad 21 und die mit diesem gekoppelte Längsstange 13 werden um dieselbe Größe $\Delta \varphi$ gedreht bzw. geschwenkt.

Da das Zwischenglied 15 und die Längs-stange 13 zum Parallelogramm des zweiten Gliedes 9 gehören, so wird der Winkel zwischen dem Ausführungsorgan 7 und der Längsstange 14 ebenfalls um die Größe $\Delta \varphi$ verändert.

Somit bewegt sich das Ausführungsorgan 7 längs einer geraden Linie, die zur Geraden A - B parallel ist, unter Beibehaltung der ursprünglichen Orientierung.

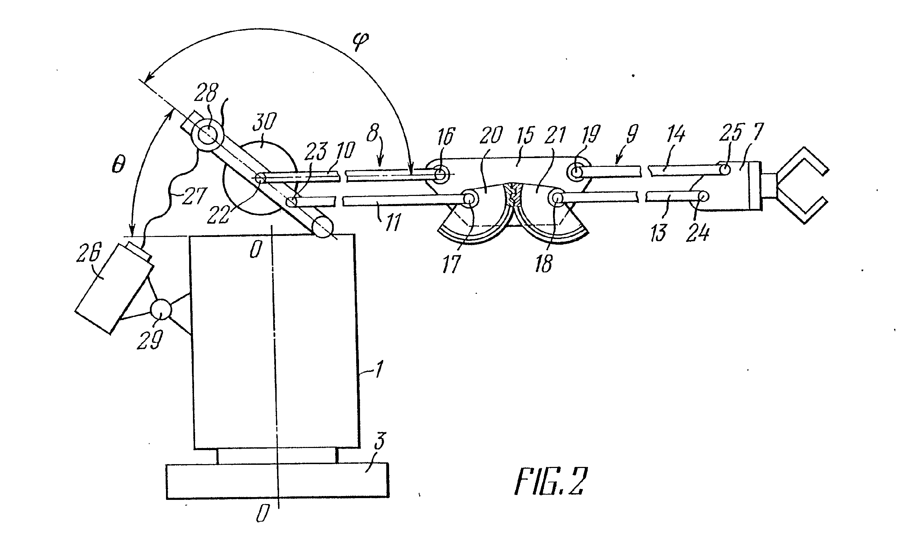

Beim Erreichen des maximalen Winkels befindet sich der Arm in der vollständig ausgestreckten Lage, wie dies in Fig.2 dargestellt ist.

Hierbei befinden sich die Längs-stangen 11 und 13 auf einer Geraden, die durch die Gelenke 23 und 24 geht.

Zur Durchführung des Hebens (Senkens) des Armes schaltet man den Antrieb 26 ein, der über die Schraube 27 und die Mutter 28 die Quer-stange 12 und zusammen mit ihr auch den Arm relativ zum Gelenk 6 verschwenkt, ohne die Konfiguration des Armes zu ändern. Dabei verändert sich der Winkel $\theta$ zwischen der Quer-stange 12 und der oberen Ebene der Stütze 1.

Zur Drehung des Roboters wird der Antrieb 4 eingeschaltet, der über das Getriebe 5 die Stütze 1 um die Vertikalachse O - O dreht.

Gewerbliche Verwertbarkeit

Die Erfindung kann mit dem größten Erfolg bei der Schaffung von Robotern angewandt werden, die zum Gas- und Elektroschweissen sowie zur Bedienung technologischer Ausrüstung, beispielsweise zur Beschickung von Zerspa-nungsmaschinen mit Rohlingen, bestimmt sind.

Außerdem kann die Erfindung in handgesteuerten Manipulatoren Anwendung finden, die zum Heben und Befördern von schweren Rohlingen bestimmt sind.

PATENTANSPRÜCHE

1. Industrieroboter, der eine drehbare Stütze (1) und einen an dieser angelenkten mechanischen Arm mit einem Ausführungsorgan (7) enthält, welcher Arm aus zwei Gliedern (8, 9) besteht, von denen das eine (8) ein Parallelogramm darstellt und Längs—stangen (10, 11) enthält, dadurch gekennzeichnet, daß das zweite Glied (9) des Armes ebenfalls ein Parallelogramm darstellt, Längs—stangen (13, 14) enthält und mit dem ersten Glied (8) mittels eines Zwischengliedes (15) gekoppelt ist, das in Form eines Vierecks ausgebildet ist, in dessen Ecken Gelenke (16, 17, 18, 19) angebracht sind, welche das Zwischenglied (15) mit den Längs—stangen (10, 11, 13, 14) des ersten (8) und des zweiten Gliedes (9) verbinden, wobei zwei benachbarte Gelenke (17, 18), die die Längs-stangen (11, 13) der Glieder (8, 9) verbinden, mit gleichachsig mit den Gelenken (17, 18) angeordneten Zahnrädern (20, 21) ausgestattet sind, die sich im Eingriff miteinander befinden und mit den erwähnten Längs—stangen (11, 13) der beiden Glieder (8, 9) starr verbunden sind.

2. Industrieroboter nach Anspruch 1, dadurch ge-kennzeichnet, daß das Viereck ein Trapez darstellt, dessen kleinere Grundlinie der Stütze (1) des Roboters zugewandt ist.

*FIG.1*

FIG.2

EP 0 396 752 A1

# INTERNATIONAL SEARCH REPORT

International Application No PCT/SU88/00245

## I. CLASSIFICATION OF SUBJECT MATTER (if several classification symbols apply, indicate all) [6]

According to International Patent Classification (IPC) or to both National Classification and IPC

Int.Cl.5      B25J 9/06

## II. FIELDS SEARCHED

| Minimum Documentation Searched [7] | |
|---|---|
| Classification System | Classification Symbols |
| Int.Cl.5 | B25J 1/00, 1/02, 9/00, 9/06 |

Documentation Searched other than Minimum Documentation
to the Extent that such Documents are Included in the Fields Searched [8]

## III. DOCUMENTS CONSIDERED TO BE RELEVANT [9]

| Category [•] | Citation of Document, [11] with indication, where appropriate, of the relevant passages [12] | Relevant to Claim No. [13] |
|---|---|---|
| A | SU, A1, 601154 (A.A. KARSAKOV et al) 9 March 1978 (09.03.78); see figure 1 | 1 |
| A | SU, A1, 664909 (A.S. GALANOV et al) 30 May 1979, (30.05.79); see figure 1 | 1 |
| A | Iu. G. Kozyrev "Promyshlennye roboty" Spravochnik, 1983, Mashinostroenie, (Moscow), see pages 138-139; figure 27 | 1 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

## IV. CERTIFICATION

| Date of the Actual Completion of the International Search | Date of Mailing of this International Search Report |
|---|---|
| 18 July 1989 (18.07.89) | 15 August 1989 (15.08.89) |

| International Searching Authority | Signature of Authorized Officer |
|---|---|
| ISA/SU | |

Form PCT/ISA/210 (second sheet) (January 1985)